# EUROPEAN PATENT SPECIFICATION

(11) **EP 3 122 697 B1**
(45) Date of publication and mention of the grant of the patent: **28.02.2018**
(21) Application number: 15712367.0
(22) Date of filing: 26.03.2015
(51) Int. Cl.: C04B 28/06, E04B 1/94, C04B 28/14, C09D 5/18, C04B 111/28

(54) **FIREPROOFING CEMENTITIOUS COATING COMPOSITION**
FEUERBESTÄNDIGE, ZEMENTARTIGE BESCHICHTUNGSZUSAMMENSETZUNG
COMPOSITION DE REVÊTEMENT À BASE DE CIMENT IGNIFUGE

(30) Priority: 28.03.2014 EP 14162420
(43) Date of publication of application: 01.02.2017
(73) Proprietor: Akzo Nobel Coatings International B.V., 6824 BM Arnhem (NL)
(72) Inventor: MORRIS, Owen, Hiratsuka Kangawa 254-0806 (JP); HUWILER, Lukas, CH-6206 Neuenkirch (CH)
(74) Representative: Akzo Nobel IP Department
(86) International application number: PCT/EP2015/056489
(87) International publication number: WO 2015/144796

(56) References cited:
- WO-A1-93/10054
- WO-A1-2006/094528
- WO-A1-2014/122085
- CN-A- 101 570 422
- DE-A1-102004 060 748
- FR-A1- 2 900 653
- GB-A- 2 277 926
- US-A- 5 603 759
- DATABASE WPI Week 201243 Thomson Scientific, London, GB; AN 2012-G99384 XP002731886, -& CN 102 476 939 A (GAO J) 30 May 2012 (2012-05-30) cited in the application

## Description

The present invention relates to a novel cementitious composition. The composition when mixed with water forms a coating composition which may be used for coating substrates to provide fire protection, in particular passive fire protection. The present invention also relates to substrates coated with this coating composition, and method of protecting substrates from fire by coating the substrate with the coating composition.

The composition of the present invention comprises a combination of a specific type of cement, light-weight inorganic fillers having a bulk density of less than 0.5g/cm³ and organic polymers. The composition has a low bulk density of 0.8g/cm³ or less. It is generally known that lowering the bulk density of a coating composition will result in a reduction in the strength and chemical stability of coating. Coatings having low strength are prone to cracking, spalling and delamination, especially in a fire. Weak coatings are conventionally strengthened through the use of a supportive mesh, usually metal that is physically fixed to the substrates with pins (usually welded metal pins). However the use of pinned-meshes is time and resource demanding, and significantly increases the cost of these systems. In addition the use of pins and meshes provide a direct route for water to the substrate, which increases the likelihood of degradation and/or corrosion of the substrate. The present invention surprisingly provides a coating composition which provides a coating with sufficient strength to the extent that it is capable of adhering to the substrate to be protected, such as metal or a coated metal, without the use of pins, and it also provides excellent fire protection.

By fire protection, we mean the operation of the coating as an insulator to the coated-substrate, increasing the time it takes for the coated-substrate to fail due to the heat of fire. Many materials, such as steel, rapidly lose their strength and fail in a fire. Structural collapse of "high-rise" office blocks, oil and gas facilities or other infrastructures as a result of a fire can be catastrophic in terms of escalation of the incident, damage to property, and even loss of life. A coating with good fire protection increases the time it takes for the coated structure to fail due to the heat of fire.

Cementitious materials comprising organic polymers or filler materials are known.

DE 10 2004 060 748 concerns a mortar mixture comprising a fireproof cement, refractory clay and dispersion powders of organic polymers. The mortar mixture does not comprise lightweight fillers and does not have a bulk density of 0.8g/cm³ or less, as required by the present invention. The mortar mixture is used for adhering bricks of a furnace. The mortar mixture however is not suitable for providing passive fire protection

DE 10 2008 014 526 concerns a two-component reaction resin system comprising amongst other things, a cement, a polyorganosiloxane, an epoxy-functional component and filler material, such as sand. It is concerned with providing materials having increased resistance to chemical and climate influences which have a reduced tendency to get dirty, are easy to clean and have visibly higher colour stability. It is not concerned with providing compositions for passive fire protection. It explains that if a composition has an open-porous structure, impurities can penetrate into the surface causing aesthetic and hygienic impairment. In contrast, the compositions of the present invention comprise light weight inorganic fillers and have a bulk density of 0.8g/cm³ or less.

WO 93/10054, like the previous disclosures, is not concerned with compositions for providing passive fire protection. Rather it discloses a plaster product for use as a rendering and/or colour finish product on a facade which has reduced risk of unsightly lime precipitation. The plaster product comprises aluminous cement, a filler and various additives including methyl cellulose. This disclosure provides no pointer to coating compositions for providing passive fire protection. Nor is there any disclosure of a coating composition comprising light weight inorganic fillers, having a bulk density of 0.8g/cm³ or less, which are capable of being applied direct to substrate (metal or coated metal) without pins and/or mesh. WO2014/122085 concerns fire protection mortars comprising a binder, fillers and fibres.The lightweight filler (expanded perlite) is added in an amount of 0.1-20 wt%.

FR 2 900 653 describes a material comprising calcium aluminum cement, two types of inorganic filler (perlite and ceramic microspheres) and specific inorganic fibres(s) (wollastonite, quartz fibres, basalt fibres and pure silica fibres). All the Example of FR 2 900 653 have a bulk density of greater than 0.8g/cm³. Notably, the compositions of FR 2 900 653 only contain inorganic material. The materials of FR 2 900 653 are cured in molds to form panels. The panels are reported to have good flexibility or elasticity allowing their bending and installation on curved walls, good wear resistance and hardness. This disclosure is however not concerned with coating compositions for providing fire protection that are capable of adhering directly to a substrate without the use of pins. In fact, the inventors of the present invention found that the materials of FR 2 900 653 were unsuitable for use as a coating composition for providing fire protection. The reason for this is that when it is applied as a coating composition, it fails adhere to the underling substrate (see comparative example herein).

CN102476939 discloses compositions comprising aluminate cement and inorganic filler materials for providing fire protection. According to this document, the coatings of CN102476939 have good cohesion, water resistance and flexibility. The compositions of CN102476939 are completely inorganic and do not comprise organic polymeric material.

As previously mentioned, it is surprising that despite the low bulk density of the composition of the present invention, a coating formed from the composition of the present invention has a combination of excellent fire protection, strength and adhesion. The strength and adhesion of a coating in accordance with the present invention is so good that the coating composition can even be applied, for example to metal/coated metal (e.g. coated with an epoxy primer), without out a mesh and/or pins. Further it is generally known that organic materials such as organic polymers degrade when subjected to fire and high heat, and therefore their properties when exposed to high heat or fire are limited. It therefore could not have been not expected that the composition of the present invention comprising organic polymer would provide a coating with a combination of excellent fire protection, strength and adhesion.

Commercially available cement-based fire proofing materials for exterior use are typically portland-cement based. For interior use, they are generally gypsum based. Examples of portland-cement based fire proofing products for exterior use are Monokote ® (Grace Construction Products), Fendolite ® (Promat International) and Pyrocrete ® (Carboline). The coating composition of the present invention surprisingly has better adhesion and strength than currently known Portland-cement based coatings.

Fire performance (sometimes called "fire protection") may be tested by exposure to a time-temperature curve in accordance with standard method UL 1709 - hydrocarbon fire curve. The time the coated substrate takes to heat up to 538 degrees C (1000F) is regarded as the time-to-failure of that coating. Coatings which are considered to have a good fire protection have a time-to-failure of 2 hours or more when determined by exposure to a time-temperature curve in accordance with standard method UL 1709.

The superior properties of the composition of the present invention have been achieved by the inventive combination of components set forth herein.

A first aspect of the present invention is to a composition having a bulk density of 0.8g/cm³ or less comprising:
(a) 25-65 weight % of an inorganic binder comprising
   (i) 83 - 100 weight % of calcium aluminate cement,
   (ii) 0-14 weight % of calcium sulphate,
   (iii) 0-9 weight % of portland cement
   wherein the weight % (i),(ii),(iii) is calculated on the sum of (i)+(ii) and (iii);
(b) 0.5-15 weight % of one or more organic polymers; and
(c) 30-75 weight % of one or more inorganic fillers wherein the bulk density of the fillers is less than 0.5g/cm³, wherein weight % is based on the total weight of all the non-volatile components in the composition.

A volatile component is a component which has an initial boiling point less than or equal to 250 °C measured at a standard atmospheric pressure of 101.3 kPa. A non-volatile component is therefore a component which has an initial boiling point more than 250 °C measured at a standard atmospheric pressure of 101.3 kPa.

Another aspect of the invention is a coating composition comprising the composition described herein and water.

Another aspect of the invention is a coated substrate coated with the coating composition, preferably wherein the substrate is metal, preferably steel. Another aspect of the invention is a method of protecting a substrate from fire by coating the substrate with the coating composition to form a protective coating on the substrate, preferably without the use of a mesh and / or pins.

### Inorganic Binder

The composition of the present invention comprises 25-65 weight % of an inorganic binder. Preferably the composition comprises 40-60 weight % of an inorganic binder.

The inorganic binder comprises
(i) 83-100 weight % of calcium aluminate cement,
(ii) 0-14 weight % of calcium sulphate,
(iii) 0-9 weight % of portland cement
wherein the weight % of (i), (ii), (iii) is based on the sum of (i)+(ii)+(iii).

Preferably the percentage weight (weight %) of (i) in the inorganic binder ranges from 90 to 100 wt%, the percentage weight of (ii) in the inorganic binder ranges from 0 to 9 wt%, and the percentage weight of (iii) in the inorganic binder ranges from 0 to 4 weight %.The percentage weight of (i):(ii):(iii) are based on the sum of (i):(ii):(iii).

In one example, the inorganic binder may comprise 100 weight % calcium aluminate cement. In another example, the inorganic binder may comprise 90-100 weight % of calcium aluminate cement, 0 to 9 weight% of calcium suphate and substantially no (e.g. 0%) portland cement.

The composition of the calcium aluminate cement is according to DIN EN 14647. Calcium aluminate cement is known not to be a uniform and specific chemical compound, but a cement with a varying content of Al₂O₂ (e.g. between 40-80 wt%) and CaO (e.g. between 20-60 wt%). An example of commercially available calcium aluminate cement is ciment fondu, supplied by Kerneos.

The composition of portland cement is according to DIN EN 197-1 (CBM I to CEM V). An example of commercially available portland cement is mastercrete original (CEMII/A-LL 32.5R) supplied by Blue Circle.

An example of commercially available calcium sulphate (CaS) is Prestia 2500 sourced from Lafarge. The inorganic binder may also comprise other ingredients, for example blast furnace slag. In general blast furnace slag contains 30 to 45 % by weight CaO, 30 to 45 % by weight SiO₂, 5 to 15 % by weight Al₂O₃, 4 to 17 % by weight MgO, 0,5 to 1 % by weight S and traces of further elements. Commercially available blast furnace slag is Slag- star(R) of Baumit or Merit 5000 of SSAB Merox.

### One of more organic polymers

The composition comprises 0.5-15.0 weight % of one or more organic polymers. For the avoidance of doubt, by organic polymers we mean polymers comprising carbon atoms.

For example, the one or more organic polymers may be polymers prepared from ethylenically unsaturated monomers and/or siloxanes.

If the one or more organic polymers are prepared from ethylenically unsaturated monomers, then the organic polymers are preferably present in the composition from 2.0 to 13.0 weight %, preferably 2.0-11.0 weight %, more preferably 2.0-9.0 weight %.

Suitably, the mass average molecular weight of the organic polymer prepared from ethylenically unsaturated monomers is between 10⁴-10⁸.

The organic polymers may be provided in the form of a powder dispersible in water (a "water-redispersible polymer powder"), or in the form of a polymer dispersion. In the case of polymer dispersions, the amount in % by weight refers to the solids content of the polymer dispersions.

Examples of ethylenically unsaturated monomers which may be used to prepared the organic polymer alone or in combination are: (meth)acrylates, vinyl acetates, vinyl aromatics (e.g. styrene), vinyl halides (e.g. vinyl chloride), vinyl alcohols, vinyl esters (such as vinyl propionate, vinyl laurate, and versatic acids such as VeoVa9, VeoVa1O, VeoVa11), acrylonitrile, simple alkenes having one alkene bond (e.g. ethene and propene) and polyenes having two or more alkene bonds (e.g. dienes such as 1,3-butadiene). Suitable monomers typically comprise from 1 to 15 carbon atoms.

Examples of suitable homopolymer and copolymers are vinyl acetate homopolymers, copolymers of vinyl acetate with ethylene, copolymers of vinyl acetate with ethylene and with one or more other vinyl esters, copolymers of vinyl acetate with ethylene and (meth) acrylic ester, copolymers of vinyl acetate with (meth)acrylates and other vinyl esters, copolymers of vinyl acetate with ethylene and vinyl chloride, copolymers of vinyl acetate with acrylates, styrene-acrylic ester copolymers, styrene-1,3-butadiene copolymers, vinyl chloride-ethylene-copolymers.

Preference is given to: vinyl acetate homopolymers; copolymers of vinyl acetate with ethylene; copolymers of vinyl acetate, ethylene and styrene; copolymers of vinyl acetate, ethylene and with one or more other co-monomers from the group of vinyl esters having from 1 to 15 carbon atoms in the carboxylic acid radical, e.g. vinyl propionate, vinyl laurate, vinyl esters of alpha-branched carboxylic acids having from 9 to 13 carbon atoms (versatic acids), such as VeoVa9, VeoVa1O, VeoVa11;copolymers of vinyl acetate, ethylene, and (meth) acrylic ester of unbranched or branched alcohols having from 1 to 15 carbon atoms, in particular N-butyl acrylate or 2-ethylhexyl acrylate; and copolymers of vinyl acetate, vinyl laurate or vinyl esters of an alpha-branched carboxylic acids having from 9 to 13 carbon atoms, and (meth) acrylic esters of unbranched or branched alcohols having from 1 to 15 carbon atoms, in particular n-butyl acrylate or 2 -ethyl hexylacrylate, and ethylene; copolymers of vinyl acetate, ethylene, and vinyl chloride.

Also preferred are (meth)acrylate copolymers, for example copolymers of n-butyl acrylate or 2-ethylhexyl acrylate, or copolymers of methyl methacrylate with n-butyl acrylate and/or 2-ethylhexyl acrylate; styrene-acrylic ester copolymers using one or more monomers from the group of methyl acrylate, ethyl acrylate, propyl acrylate, n-butyl acrylate, 2-ethylhexyl acrylate; vinyl acetate-acrylic ester copolymers using one or more monomers from the group of methyl acrylate, ethyl acrylate, propyl acrylate, n-butyl acrylate, 2-ethylhexyl acrylate, and, where appropriate, ethylene, styrene-1, 3 -butadiene copolymers; vinyl chloride-ethylene copolymers.

Aqueous polymer dispersions and the water-redispersible powders of the above-mentioned polymers that are obtainable from them by drying are known and are available commercially. The polymers are prepared in a conventional manner, preferably by the emulsion polymerization process. Processes for the preparation of aqueous polymer dispersions and redispersible polymer powders are described in WO 2004/092094.

Examples of water-redispersible polymer powders are, for example FX7000 ® (Elotex) which is a styrene acrylate copolymer, HD 1500 ® (Elotex) which is a vinyl acetate & vinyl versatate copolymer and FX2322 ® (Elotex) which is a vinyl acetate & ethylene copolymer.

Polymer dispersions are usually stabilized with a protective colloid. Suitable protective colloids are partially hydrolyzed or fully hydrolyzed polyvinyl alcohols, polyvinylpyrrolidones; polyvinylacetals; polysaccharides in water-soluble form such as starches (amylose and amylopectin), celluloses and their carboxymethyl, methyl, hydroxyethyl, and hydroxypropyl derivatives, proteins such as casein or caseinate, soya protein, and gelatin; lignin sulfonates; synthetic polymers such as poly(meth) acrylic acid, copolymers of (meth) acrylates with carboxy-functional comonomer units, poly (meth) acrylamide, polyvinylsulfonic acids, and the water-soluble copolymers thereof; melamine-formaldehyde sulfonates, napthaline- formaldehyde sulfonates, and styrene-raaleic acid and vinyl ether-maleic acid copolymers. Partially hydrolyzed or fully hydrolyzed polyvinyl alcohols are preferred. Most preferred are polymer compositions without emulsifier.

A polyorganosiloxane is defined as a polymer or an oligomer which has a -Si-O-backbone with a linear, branched, cyclic, ladder and/or cage structure, and at least one organic side group. At least part of the silicon atoms is attached to one, two, or three oxygen atoms. It is possible for part, but not all, of the silicon atoms to be attached to four oxygen atoms. A polyorganosiloxane therefore comprises silicon, carbon and oxygen atoms.

Examples of groups that may be present in the polyorganosiloxane are alkyl, aryl, hydroxyl, alkoxy, acetoxy, enoxy, oxime , and amine groups.

If the one or more polymers are polyorganosiloxanes, then they are preferably present in the composition from 0.5 to 10.0 weight%, preferably 0.5-8.0 weight%, more preferably 0.5 to 4.0 weight percent.

### One or more inorganic fillers

The inorganic filler(s) are added to the composition for two reasons: (i) to reduce the density of the coating prepared from the composition and also (ii) to improve the fire protection performance of the coating. The fillers are mixed into the coating composition in an amount which results in the coating composition having a density of 0.8 g/cm³ or less.

To achieve the desired density of the coating, the composition comprises 30-75 weight % of the one or more inorganic fillers. Typically, the composition comprises 45-60 weight % of one or more inorganic fillers.

The bulk density of the inorganic fillers is less than 0.5 g/cm³ (500g/L). Bulk density may be determined according to DIN/ISO 697. Such fillers are sometimes referred to "lightweight fillers".

Examples of the inorganic fillers include mica, pumice, foamed glass, aerated concrete, perlites or vermiculites. Suitably mixtures of fillers are used. Preferred fillers for use in the present invention are mica and / or vermiculite. Most preferably, the composition comprises mica and vermiculite having a bulk density of less than 0.5 g/cm³ (500g/L). Surprisingly, despite the high amount of filler(s) in the composition, a coating prepared therefrom, when applied to a substrate has adequate adhesion and compressive strength to the extent that supporting meshes and/or pins are not required.

### Other Optional Components

The compositions may contain further common ingredients used in cementious products, for example pozzolanic compounds (Pozzolans), thickeners and retarders.

Pozzolans are silica-containing or silica- and alumina- containing natural or synthetic materials which are not themselves able to act as binders but together with water and lime form water-insoluble compounds having cement-like properties. Natural pozzolans include glass-rich ashes and rocks of volcanic origin, for example pumice, trass (finely milled tuff), santorin earth, kie-selguhr, hornstones (silica rocks), chert and moler earth. Synthetic pozzolans include fired, ground clay (ground brick), fly ashes such as ash from a coal- fired power station, silica dust, oil shale ash (oil shale = bituminous, lime-containing shale) and calcined kaolin (metakaolin). Examples of synthetic pozzolans are ground brick, fly ash, silica dust, oil shale ash and metakaolin.

Examples of thickeners are polysaccharides such as cellulose ethers and modified cellulose ethers, starch ethers, guar gum or xanthan gum, phyllosilicates (e.g. Bentonite which is an aluminium phyllosilicate), polycarboxylic acids such as polyacrylic acid and the partial esters thereof, polyvinyl alcohols, which optionally have been acetalized and/or hydrophobically modified, casein, and associative thickeners. One thicknener may be used or a mixture of thickeners. Particular suitable thickeners are cellulose ethers, modified cellulose ethers, optionally acetalized and/or hydrophobically modified, polyvinyl alcohols, and mixtures thereof.

Examples of retarders are hydroxycarboxylic acids or dicarboxylic acids or salts thereof, as well as saccharides, for example, oxalic acid, succinic acid, tartaric acid, gluconic acid, citric acid, sucrose, glucose, fructose, sorbitol and pentaerythritol. Further examples of retarders are polyphosphates, metaphosphoric acid, and borax. A particularly suitable retardant is citric acid.

The composition does not require xonotlite. Suitably, the (uncured) composition comprises less than 10 weight parts of xonotlite.

The composition preferably does not comprise inorganic fillers having a bulk density of more than 0.5g/cm³.

Preferably therefore the composition therefore does not comprise fillers such as wollanstonite and/or refractory clay sand - since these have a bulk density of more than 0.5g/cm³.

If the composition does contain other compounds, such as inorganic fillers having a more than 0.5g/cm^{3,} they must be added in an amount so that the bulk density of the (total) composition is 0.8g/cm³ or less.

### Coating Composition

To prepare a coating composition, the composition described herein is mixed with water (and optionally one or more other solvents).

The amount of water (and other solvent(s)) required to prepare the coating composition is the amount sufficient so that the composition has a paste-like viscosity capable of application to a substrate by standard techniques such as spraying or toweling. Typically the weight ratio of water (solvent) to composition is 30-60:70-40, for example 45-55:55-45 (water: composition).

To prepare cement ready for application to a substrate, the components of the composition (e.g. (a), (b) and (c), and other optional components) are first mixed together, which is then mixed with water (and optionally other solvents) to make a paste-like mortar.

The composition prior to mixing with water (and optional solvent) is preferably dry at room temperature (25°C). If all the components in the composition are dry, the initial mixing can be carried out in a conventional dry powder mixer. An advantage to using a dry composition it is easy to transport and make directly to the site where application of the coating composition is to take place.

Once the cementitious coating composition has been prepared, it may be applied by conventional techniques such as spraying or trowelling.

The coating composition of the present invention is particularly suitable for providing passive fire protection to substrates such as metal and concrete, preferably steel.

Advantageously, the coating compositions of the present invention can cure at ambient temperatures and even sub-ambient temperatures, for example between
-10°C to 30°C (50% RH). Known Portland-cement based coating compositions on the other-hand will not cure below 10°C.

### Examples

The invention will be elucidated with reference to the following examples. These are intended to illustrate the invention but are not to be construed as limiting in any manner the scope thereof.

### Preparation of Cement Compositions - Examples 1-9

To prepare compositions 1-9, the components listed in Table 1 were mixed together on a low speed with a flat bladed stirrer for 5 minutes to produce homogeneous dry-mix mixtures. The dry mix mixtures were then gradually mixed into water, at a weight ratio of 95 g (Water): 100 g (dry mix) to produce paste-like mortar coating compositions. Immediately after preparation of the coating compositions, the coatings were applied to steel panels or in molds as described in the tests below.

**Table 1**

| | **Composition No #** | | | | | | | | |
|---|---|---|---|---|---|---|---|---|---|
| **Component (weight %)** | **1** | **2** | **3** | **4** | **5*** | **6*** | **7*** | **8*** | **9*** |
| Mica (bulk density of 200-350g/L) | 11 | 11 | 11 | 11 | 11 | 11 | 11 | 11 | 11 |
| Vermiculite (bulk density of 93-135 g/L) | 25 | 25 | 25 | 25 | 25 | 25 | 25 | 25 | 25 |
| Bermocoll M30 (AkzoNobel) | 0.2 | 0.2 | 0.2 | 0.2 | 0.2 | 0.2 | 0.2 | 0.2 | 0.2 |
| Styrene acrylate copolymer powder (FX7000 ® (Elotex)) | 4 | 4 | 4 | 4 | 4 | 4 | 4 | 4 | 4 |
| Inorganic cement | | | | | | | | | |
| Calcium aluminate cement¹ | 59.8 | 56.8 | 53.8 | 50.8 | 47.8 | 47.8 | 50.8 | 0.0 | 41.8 |
| Calcium sulphate² | 0.0 | 3.0 | 3.0 | 6.0 | 9.0 | 6.0 | 9.0 | 0.0 | 9.0 |
| Portland Cement³ | 0.0 | 0.0 | 3.0 | 3.0 | 3.0 | 6.0 | 0.0 | 59.8 | 9.0 |

| | | | | | | | | | |
|---|---|---|---|---|---|---|---|---|---|
| *Weight% is based on the total weight of all the non-volatile components in the composition* *¹ Ciment Fondue from Kerneos* *² Prestia 2500 from* Lafarge *³ Mastercrete original (CEMII*/*A-LL 32.5R) from Blue Circle* | | | | | | | | | |

Examples 1-4 are within the scope of the present invention. Examples 5-9 are not within the scope of the present invention and are provided for comparative information only.

### Adhesion Testing - An accelerated adhesion test

The coating compositions of Examples 1 to 9 and three commercial Portland cement-based coating compositions were applied by trowel to grit-blasted steel panels. No mesh and pins were used to support the coatings. The coatings were allowed to cure for 28 days at 25°C. The coatings had a dry film thickness of 25mm. The coated steel panels were then immersed in water at 25°C and visually checked for adhesion to the substrate after 1 week, 2 weeks, 3 weeks, 4 weeks, 5 weeks and 6 weeks

After a number of weeks, the coatings were found to completely delaminate from the steel panels. The time it took for the coating to completely delaminate from the steel panel is recorded in Table 2.

**Table 2**

| **Example # Composition** | **Time until coating delaminated from the steel panel** |
|---|---|
| 1 | 6 weeks |
| 2 | 6 weeks |
| 3 | 5 weeks |
| 4 | 6 weeks |
| 5* | 2 weeks |
| 6 * | 1 weeks |
| 7 * | 1 weeks |
| 8 * | 2 weeks |
| 9 * | 2 weeks |
| Commercial Portland cement-based product 1 * | 3 weeks |
| Commercial Portland cement-based product 2* | 0 weeks - Coating had delaminated before it was immersed in water |
| Commercial Portland cement-based product 3* | 0 weeks - Coating had delaminated before it was immersed in water |

| | |
|---|---|
| * *Comparative Examples* | |

As can be seen from Table 2, compositions 1-4 of the present invention had better adhesion to the steel panel compared to comparative examples 5-9 and substantially better adhesion compared to the commercially available Portland cement based products.

### Furnace Testing - hydrocarbon fire curve

Coating compositions 1, 2, 7 8 and a commercial Portland cement based product were applied by trowel to grit blasted steel panels primed with epoxy amine primer and allowed to cure for 28 days. The coatings had a dry film thickness of 35mm. The fire performance of the coatings was tested by exposure to a time-temperature curve in accordance with standard method UL 1709 - hydrocarbon fire curve. The time the coated substrate took to heat up to 538 degrees C (1000F) was regarded as the Time-to-Failure of that coating.

The Time-to-Failure test results are provided in Table 3.

**Table 3**

| **Example** | **Time to Failure (minutes)** |
|---|---|
| 1 | 129 |
| 2 | 128 |
| 7* | 124 |
| 8* | 116 |
| Commercial Portland cement-based product | 120 |

| | |
|---|---|
| **Comparative Examples* | |

Table 3 shows that coatings 1 and 2 have a better fire performance compared to comparative examples 7 and 8 and the commercial Portland cement based product.

### Compressive Strength Testing following 28 days Prohesion Spray

Each of coating compositions 1 to 9 were poured into 160x40x40mm "triple gang prism molds" (available from Impact Test Equipment Ltd) in order to prepare each coating composition, three prisms having dimensions 40mm x 40mm x 160mm for testing. The prisms were left to cure overnight at 25°C / 50%RH and removed from the molds the following morning. The prisms were left to fully cure for 28 days at 25°C/ 50%RH.

The prisms were then subjected to 28 days prohesion salt-spray testing in accordance with ASTM G85, in which the prisms, during the 28 day period, were subjected to repeating 1-hour salt-spray cycles and 1-hour drying cycles. In the "dry cycle", the prisms were dried at 35°C. In the "salt-spray cycle", the prisms were sprayed with 0.35% ammonium sulphate, 0.05% sodium chloride solution at 23°C.

After the 28-day prohesion salt-spray, the prisms were tested for compressive strength, whereby each block was placed between 2 plates and subjected to an applied force until fracture. The force at which the blocks fractured describes the compressive strength of the block. For each coating composition, there were three prisms which were tested to give 3 compressive strength values for each coating composition. The mean average of the compressive strength values for each coating composition is provided in Table 4 below.

**Table 4**

| **Example** | **Mean Average Compressive Strength (MPa)** |
|---|---|
| 1 | 4.02 |
| 2 | 5.11 |
| 3 | 4.27 |
| 4 | 4.21 |
| 5* | 3.67 |
| 6* | 3.47 |
| 7* | 3.85 |
| 8* | 3.80 |
| 9* | 3.46 |

| | |
|---|---|
| **Comparative Examples* | |

Table 4 shows that the coating compositions 1-4 of the present invention have superior compressive strength when compared to comparative examples 5-9.

### Comparative Example - Example A from FR 2 900 653

The formulation of Example A from FR 2 900 653 was prepared by mixing 46.00% calcium aluminate cement, 25.60% wollastonite, 17.60 % ceramic microsperes and 10.8% perlite by high speed disperser. Water (approximately 50-60% of the weight of the powder) was added to this formulation until the mixture was the required thickness to apply. The material was cast onto 150*300*5mm steel panels at a dry film thickness of 25mm which had already been pre-coated with epoxy-amine primer. The material was allowed to cure a room temperature (about 20°C). A frame was used to hold the material in place until it dried. After 24 hours it was oberved that the cement had fully delaminated from the substrate. Due to delamination of the cured material from the substrate no fire testing, compressive strength testing or adhesion testing could be carried out.

## Claims

1. A composition having a bulk density of 0.8g/cm³ or less comprising:
(a) 25-65 weight % of an inorganic binder comprising
(i) 83 to 100 weight % of calcium aluminate cement,
(ii) 0 to 14 weight % of calcium sulphate,
(iii) 0 to 9 weight % of portland cement
wherein the weight % of (i), (ii), (iii) is based on the sum of (i)+(ii)+(iii),
(b) 0.5-15 weight % of one or more organic polymers,
(c) 30-75 weight % of one or more inorganic fillers wherein the bulk density of the fillers is less than 0.5g/cm³.
wherein weight % is calculated on the total weight of all the non-volatile components in the composition.

2. The composition of Claim 1 wherein the one or more organic polymers are polymers prepared from ethylenically unsaturated monomers or/and polyorganosiloxanes.

3. The composition of Claim 2, wherein the one or more organic polymers are polymers prepared from ethylenically unsaturated monomers selected from one or more of the following: (meth)acrylate monomer(s), vinyl acetate monomer(s), vinyl aromatic monomer(s), vinyl halide monomer(s). vinyl alcohol monomer(s), vinyl ester monomer(s), acrylonitrile monomer(s), alkene monomer(s) containing one alkene bond, and polyene monomer(s) containing two or more alkene bonds.

4. The composition of any preceding claim, comprising 2 to 13 weight %, preferably 2 to 11 weight %, more preferably 2 to 9 weight % of one or more polymers prepared from ethylenically unsaturated monomers of one or more polymers.

5. The composition of Claim 1 or Claim 2, wherein the one or more polymers are one or more polyorganosiloxanes, and wherein the composition comprises 0.5 to 10 weight%, preferably 0.5 to 8 weight %, more preferably 0.5 to 4 weight % of the one or more polyorganosiloxanes.

6. The composition of any preceding claim, wherein the inorganic fillers are selected from mica, pumice, foamed glass, aerated concrete, perlites or vermiculites, preferably mica and vermiculite.

7. The composition of any preceding claim comprising 30 to 50 percent by weight of the one or more inorganic fillers.

8. The composition of any preceding claim, wherein the percentage weight (weight%) of calcium aluminate cement in the inorganic binder ranges from 90 to 100 wt%, the percentage weight of calcium sulphate in the inorganic binder ranges from 0 to 9 wt%, and the percentage weight of Portland cement in the inorganic binder ranges from 0 to 4 weight %.

9. A coating composition comprising the composition of any preceding claim and water.

10. A coated substrate coated with the coating composition of claim 9.

11. The coated substrate of claim 10, wherein the substrate is metal

12. The coated substrate of claim 11, wherein the substrate is steel.

13. The coated substrate of claims 10, 11 or 12 which does not comprise a supportive mesh and/or pins.

14. A method of protecting a substrate from fire by coating the substrate with the coating composition of claim 9, and allowing the coating composition to form a coating.

15. The method of claim 14 which does not use a supporting mesh and/or pins.

## Patentansprüche

1. Zusammensetzung, die eine Schüttdichte von 0,8 g/cm³ oder weniger hat, umfassend:
(a) 25-65 Gew.% eines anorganischen Bindemittels, umfassend
(i) 83 bis 100 Gew.% von Kalziumaluminatzement,
(ii) 0 bis 14 Gew.% von Kalziumsulfat,
(iii) 0 bis 9 Gew.% von Portlandzement
wobei die Gew.% von (i), (ii), (iii) auf der Summe von (i)+(ii)+(iii) basieren,
(b) 0,5-15 Gew.% von einem oder mehreren organischen Polymer(en),
(c) 30-75 Gew.% von einem oder mehreren anorganischen Füllstoffen, wobei die Schüttdichte der Füllstoffe weniger als 0,5 g/cm³ beträgt,
wobei die Gew.% auf das Gesamtgewicht aller nicht flüchtigen Bestandteile in der Zusammensetzung bezogen sind.

2. Zusammensetzung nach Anspruch 1, wobei das eine oder die mehreren Polymer(e) Polymere sind, die aus ethylenisch ungesättigten Monomeren oder/und Polyorganosiloxanen hergestellt sind.

3. Zusammensetzung nach Anspruch 2, wobei das eine oder die mehreren Polymer(e) Polymere sind, die aus ethylenisch ungesättigten Monomeren hergestellt sind, ausgewählt aus einem oder mehreren der Folgenden: (Meth)acrylatmonomer(e), Vinylacetatmonomer(e), vinylaromatische Monomer(e), Vinylhalidmonomer(e), Vinylalkoholmonomer(e), Vinylestermonomer(e), Acrylnitrilmonomer(e), Alkenmono-mer(e), enthaltend eine Alkenbindung, und Polyenmonomer(e), enthaltend zwei oder mehr Alkenbindungen.

4. Zusammensetzung nach einem der vorhergehenden Ansprüche, umfassend 2 bis 13 Gew.%, vorzugsweise 2 bis 11 Gew.%, weiter bevorzugt 2 bis 9 Gew.%, von einem oder mehreren Polymer(en), hergestellt aus ethylenisch ungesättigten Monomeren von einem oder mehreren Polymer(en).

5. Zusammensetzung nach Anspruch 1 oder Anspruch 2, wobei das eine oder die mehreren Polymer(e) eines oder mehrere Polyorganosiloxane sind, und wobei die Zusammensetzung 0,5 bis 10 Gew.%, vorzugsweise 0,5 bis 8 Gew.%, weiter bevorzugt 0,5 bis 4 Gew.%, des einen oder der mehreren Polyorganosiloxane umfasst.

6. Zusammensetzung nach einem der vorhergehenden Ansprüche, wobei die anorganischen Füllstoffe ausgewählt sind aus Glimmer, Bimsstein, geschäumtem Glas, Porenbeton, Perlit oder Vermiculit, vorzugsweise Glimmer und Vermiculit.

7. Zusammensetzung nach einem der vorhergehenden Ansprüche, umfassend 30 bis 50 Gew.% des einen oder der mehreren anorganischen Füllstoffe.

8. Zusammensetzung nach einem der vorhergehenden Ansprüche, wobei die Gew.% von Kalziumaluminatzement an dem anorganischen Bindemittel von 90 bis 100 Gew.%, die Gew.% von Kalziumsulfat an dem anorganischen Bindemittel von 0 bis 9 Gew.%, und die Gew.% von Portlandzement an dem anorganischen Bindemittel von 0 bis 4 Gew.% reichen.

9. Beschichtungszusammensetzung, umfassend die Zusammensetzung nach einem der vorhergehenden Ansprüche und Wasser.

10. Beschichtetes Substrat, beschichtet mit der Beschichtungszusammensetzung nach Anspruch 9.

11. Beschichtetes Substrat nach Anspruch 10, wobei das Substrat Metall ist.

12. Beschichtetes Substrat nach Anspruch 11, wobei das Substrat Stahl ist.

13. Beschichtetes Substrat nach Anspruch 10, 11 oder 12, das kein unterstützendes Netz und/oder Stifte umfasst.

14. Verfahren zum Schutz eines Substrates vor Feuer durch Beschichten des Substrates mit der Beschichtungszusammensetzung nach Anspruch 9, und Zulassen, dass die Beschichtungszusammensetzung eine Beschichtung bildet.

15. Verfahren nach Anspruch 14, das kein unterstützendes Netz und/oder Stifte verwendet.

## Revendications

1. Composition ayant une masse volumique apparente inférieure ou égale à 0,8 g/cm³ comprenant :
(a) 25 à 65% en poids d'un liant inorganique comprenant
(i) 83 à 100% en poids de ciment d'aluminate de calcium,
(ii) 0 à 14% en poids de sulfate de calcium,
(iii) 0 à 9% en poids de ciment portland
où le % en poids de (i), (ii), (iii) est basé sur la somme de (i)+(ii)+(iii),
(b) 0,5 à 15% en poids d'un ou de plusieurs polymère(s) organique(s),
(c) 30 à 75% en poids d'une ou de plusieurs charge(s) inorganique(s), où la masse volumique apparente des charges est inférieure à 0,5 g/cm³,
où le % en poids est calculé sur le poids total de tous les composants non volatils dans la composition.

2. Composition de la revendication 1, dans laquelle le ou les plusieurs polymère(s) organique(s) est/sont un/des polymère(s) préparé(s) à partir de monomères à insaturation éthylénique et/ou de polyorganosiloxanes.

3. Composition de la revendication 2, dans laquelle le ou les plusieurs polymère(s) organique(s) est/sont un/des polymère(s) préparé(s) à partir de monomères à insaturation éthylénique choisis parmi un ou plusieurs des monomères suivants : un/des monomère(s) (méth)acrylate, un/des monomère(s) acétate de vinyle, un/des monomère(s) vinylique(s) aromatique(s), un/des monomère(s) halogénure de vinyle, un/des monomère(s) alcool vinylique, un/des monomère(s) ester vinylique, un/des monomère(s) acrylonitrile, un/des monomère(s) alcène contenant une liaison alcène et un/des monomère(s) polyène contenant deux liaisons alcène ou plus.

4. Composition de l'une des revendications précédentes, comprenant 2 à 13% en poids, de préférence 2 à 11% en poids, plus préférablement 2 à 9% en poids d'un ou de plusieurs polymère(s) préparé(s) à partir de monomères à insaturation éthylénique d'un ou de plusieurs polymère(s).

5. Composition de la revendication 1 ou 2, dans laquelle le ou les plusieurs polymère(s) est/sont un ou plusieurs polyorganosiloxane(s), et dans laquelle la composition comprend 0,5 à 10% en poids, de préférence 0,5 à 8% en poids, plus préférablement 0,5 à 4% en poids du ou des plusieurs polyorganosiloxane(s).

6. Composition de l'une des revendications précédentes, dans laquelle les charges inorganiques sont choisies parmi le mica, la pierre ponce, le verre-mousse, le béton cellulaire, les perlites ou les vermiculites, de préférence le mica et la vermiculite.

7. Composition de l'une des revendications précédentes, comprenant 30 à 50 pour cent en poids de la ou des plusieurs charge(s) inorganique(s).

8. Composition de l'une des revendications précédentes, dans laquelle le pourcentage en poids (% en poids) de ciment d'aluminate de calcium dans le liant inorganique se trouve dans une plage allant de 90 à 100% en poids, le pourcentage en poids de sulfate de calcium dans le liant inorganique se trouve dans une plage allant de 0 à 9% en poids, et le pourcentage en poids de ciment Portland dans le liant inorganique se trouve dans une plage allant de 0 à 4% en poids.

9. Composition de revêtement comprenant la composition de l'une des revendications précédentes et de l'eau.

10. Substrat revêtu qui est revêtu de la composition de revêtement de la revendication 9.

11. Substrat revêtu de la revendication 10, dans lequel le substrat est du métal.

12. Substrat revêtu de la revendication 11, dans lequel le substrat est de l'acier.

13. Substrat revêtu de la revendication 10, 11 ou 12 qui ne comprend pas de maille de soutien et/ou de broches.

14. Procédé de protection d'un substrat contre le feu en revêtant le substrat de la composition de revêtement de la revendication 9, et en permettant à la composition de revêtement de former un revêtement.

15. Procédé de la revendication 14 qui n'utilise pas de maille de soutien et/ou de broches.
